# FASCICULE DE BREVET EUROPEEN

(11) **EP 3 136 354 B1**
(45) Date de publication et mention de la délivrance du brevet: **06.05.2020**
(21) Numéro de dépôt: 16184546.6
(22) Date de dépôt: 17.08.2016
(51) Int. Cl.: G07C 13/00

(54) **MÉTHODE DE SÉCURISATION ET DE VÉRIFIABILITÉ D'UN VOTE ÉLECTRONIQUE**
SICHERUNGS- UND ÜBERPRÜFUNGSMETHODE EINER ELEKTRONISCHEN ABSTIMMUNG
METHOD FOR SECURING AND ENSURING THE AUDITABILITY OF AN ELECTRONIC VOTE

(30) Priorité: 28.08.2015 FR 1558047
(43) Date de publication de la demande: 01.03.2017
(73) Titulaire: ELECTION-EUROPE, 92100 Boulogne Billancourt (FR)
(72) Inventeur: JAMIN, Régis, 78140 Velizy (FR); DAHL, Christopher, Cambridge, MA02140 (US)
(74) Mandataire: Cabinet Novitech

(56) Documents cités:
- WO-A2-02/056230
- US-A- 6 081 793
- US-A1- 2002 077 887
- US-A1- 2010 121 765

## Description

L'invention a pour objet une méthode de sécurisation et de vérifiabilité d'un vote électronique.

Les systèmes de vote électronique peuvent être sujets à des problématiques de sécurité, notamment concernant l'intégrité et la sincérité des données de vote.

Il est connu des systèmes de vote électronique basés sur des logiciels utilisant un système de cryptage de type chiffrement RSA par un module ou un programme inspiré du langage Java. Cependant, avec de tels systèmes, le cryptage et la transmission du bulletin de vote sont effectués uniquement sur les moyens informatiques utilisés par le votant, par exemple sur l'ordinateur du votant. De plus, avec de tels systèmes, les mêmes clés de cryptage sont utilisées pour chaque votant. En particulier, le bulletin de vote crypté est envoyé directement à une base de données d'hébergement, une urne virtuelle, et aucun contrôle d'intégrité des données et donc de sincérité des données n'est effectué. Ainsi, ces systèmes sont potentiellement vulnérables, notamment à la modification des programmes ou des modules inspirés du langage Java et à une interception et manipulation d'un composant « html » de la page internet du bulletin de vote.

En outre, un système de vote électronique doit répondre aux exigences de la Commission Nationale de l'Informatique et des Libertés (CNIL) qui préconise notamment que les bulletins de vote soient cryptés de façon ininterrompue, ce qui nécessite l'usage de logiciel embarqué sur le navigateur internet, mais aussi répondre aux exigences de l'Agence Nationale de la Sécurité et des Systèmes d'Information (ANSSI) qui recommande d'éviter l'usage d'applications légères telles que les applications Java sur les navigateurs internet pour gérer la sécurité des transactions. Un système de vote électronique doit également se conformer au référentiel de sécurité de l'OWASP (Open Web Application Security Project) Top Ten 2013.

US2002/077887 A1 décrit une architecture qui permet le vote électronique anonyme sur Internet en utilisant des technologies à clé publique.

US2010/121765 A1 concerne un procédé et un dispositif de vote électronique dans des réseaux, comprenant des systèmes informatiques sur lesquels sont mis en oevre un système d'isoloir, un système valideur et un système de tableau d'affichage.

WO02/056230 A2 concerne une installation pour scrutin. Cette installation fait intervenir une infrastructure publique à clé que l'on emploie pendant l'élection.

De ce fait, il existe un besoin d'un système de vote électronique permettant de garantir l'anonymat du bulletin de vote, ainsi que la sincérité, la confidentialité, l'intégrité et l'unicité du vote électronique.

A cet effet, l'invention a pour objet une méthode de sécurisation et de vérifiabilité d'un vote électronique, la méthode étant mise en œuvre par des moyens informatiques et comprenant:
- une étape de réception d'un bulletin de vote temporaire, au cours de laquelle un bulletin de vote temporaire est reçu d'une entité votante, le bulletin de vote temporaire étant crypté au moyen d'une clé de cryptage publique de vote,
- une étape de réception d'un bulletin de vote de validation, au cours de laquelle un bulletin de vote de validation est reçu de ladite entité votante, le bulletin de vote de validation étant crypté au moyen d'une clé de cryptage publique de validation,
- une étape de décryptage, au cours de laquelle le bulletin de vote de validation est décrypté au moyen d'une clé privée de validation associée à ladite clé de cryptage publique de validation,
- une étape de validation, au cours de laquelle une demande de validation générée à partir du bulletin de vote de validation décrypté est envoyée à ladite entité votante,
les étapes précédentes étant répétées jusqu'à validation de la demande de validation par ladite entité votante suite à quoi le bulletin de vote temporaire crypté est enregistré comme bulletin de vote définitif en attente de son dépouillement.

Avantageusement, la méthode de de sécurisation et de vérifiabilité d'un vote électronique permet de répondre aux paradigmes des recommandations gouvernementales en matière de sécurité émises par la CNIL et l'ANSSI, tout en se conformant au référentiel de sécurité de l'OWASP Top Ten 2013.

De plus, le bulletin de vote est soumis à un double cryptage et le cryptage du bulletin de vote est réalisé de manière ininterrompue.

De façon avantageuse, l'utilisation d'un bulletin de vote de validation permet à l'entité votante de vérifier son vote électronique avant que ce dernier ne soit pris en compte, et ainsi de le valider si celui-ci correspond à son vote, ou de l'invalider si celui-ci diffère de son choix.

En outre, la méthode de sécurisation et de vérifiabilité d'un vote électronique permet de garantir la sincérité, la confidentialité, l'intégrité, l'unicité et l'anonymat du bulletin de vote électronique.

La méthode selon l'invention peut également comprendre une ou plusieurs des caractéristiques suivantes, considérées individuellement ou selon toute combinaisons possibles :
- la méthode comprend préalablement aux étapes de réception d'un bulletin de vote temporaire et de validation, une étape d'envoi au cours de laquelle au moins une définition de bulletin de vote, une clé de cryptage publique de vote et une clé de cryptage de validation sont envoyées à une entité votante ; et/ou
- la méthode comprend préalablement à l'étape d'envoi une étape de sélection d'au moins une clé de cryptage publique de validation au cours de laquelle au moins une clé de cryptage publique de validation est sélectionnée aléatoirement parmi un ensemble de clés de cryptage publique de validation ; et/ou
- la clé de cryptage publique de validation est différente de la clé de cryptage publique de vote ; et/ou
- la clé de cryptage privée de vote associée à la clé de cryptage publique de vote est différente de la clé de cryptage privée de validation associée à la clé de cryptage publique de validation ; et/ou
- la méthode comprend préalablement à l'étape de validation, une étape de vérification par le votant au cours de laquelle le contenu du bulletin de vote de validation est vérifié ; et/ou
- au cours de l'étape de validation dès que la demande de validation est générée le bulletin de vote de validation est supprimé ; et/ou
- le bulletin de vote temporaire n'est pas décrypté ; et/ou
- préalablement à la répétition des étapes le bulletin de vote temporaire crypté est supprimé ; et/ou
- la clé de cryptage privée de vote associé à la clé de cryptage publique du bulletin de vote temporaire est accessible uniquement aux assesseurs du vote.

L'invention se rapporte également à un produit de programme informatique, tel qu'un produit de programme d'ordinateur, comprenant une ou plusieurs séquences d'instructions stockées et accessibles à un processeur, et qui, lorsqu'elles sont exécutées par le processeur, amènent le processeur à exécuter les étapes de la méthode selon l'invention.

L'invention concerne également un support de stockage lisible par un moyen informatique, le support de stockage comprenant au moins un programme, et dans lequel le programme amène l'ordinateur à exécuter les étapes de la méthode selon l'invention.

L'invention a également pour objet un appareil comprenant un processeur configuré pour stocker une ou plusieurs séquences d'instructions et pour exécuter au moins l'une des étapes de la méthode selon l'invention.

Sauf indication contraire, les termes tels que « calculer », « déterminer », « évaluer » ou équivalent, se réfèrent à l'action d'un moyen informatique qui manipule et/ou transforme des données physiques, comme des données électroniques ou des quantités au sein des registres et/ou des mémoires, en d'autres données physiques, comme des quantités au sein des mémoires du système informatique, des registres ou des autres moyens stockage, de transmission ou d'affichage.

En outre, les modes de réalisation de la présente invention ne sont pas décrits en référence à un langage de programmation particulier. Une variété de langages de programmation peut être utilisée pour mettre en œuvre la méthode selon l'invention.

D'autres caractéristiques et avantages de la présente invention apparaitront à la lecture de la description et des figures suivantes :
- la figure 1 illustre une architecture de l'environnement de l'exécution d'un vote électronique selon un mode de réalisation de l'invention, et
- les figures 2 et 3 représentent un organigramme des étapes de la méthode de sécurisation et vérifiabilité d'un vote électronique selon un mode de réalisation de l'invention.

Il est à noter que ces dessins n'ont d'autre but que d'illustrer le texte de la description et ne constituent en aucune sorte une limitation de la portée de l'invention.

Sur les différentes figures, les éléments analogues sont désignés par des références identiques.

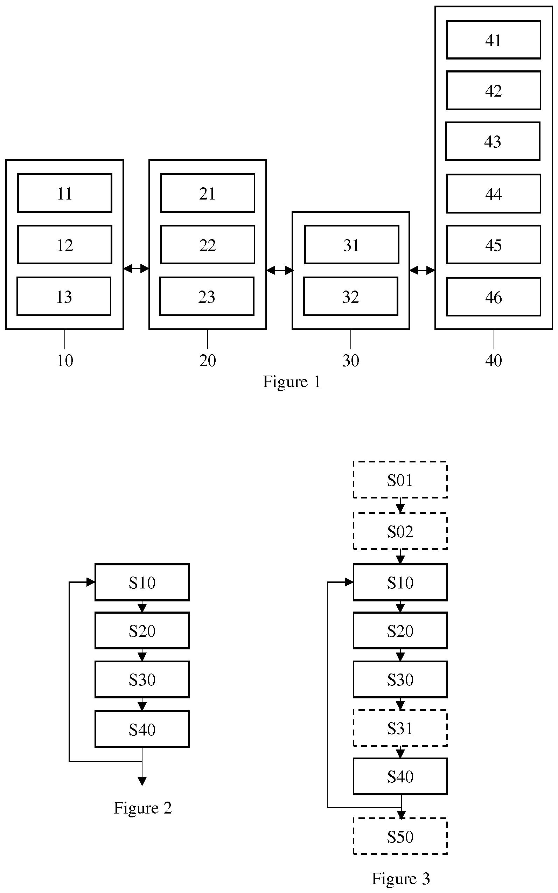

L'invention se rapporte au domaine du vote électronique. En particulier, un exemple d'une architecture de l'environnement d'exécution d'un vote électronique est illustré en figure 1.

L'environnement d'un vote électronique peut comprendre des acteurs du système de vote électronique 10, des services de réseau 20, des services de cryptographie 30, et des serveurs de bases de données 40.

Les acteurs du système de vote électronique 10 comprennent par exemple les électeurs 11, les membres des bureaux de vote 12, le Président central et les assesseurs 13 éventuellement assistés d'un huissier ou d'un expert dans le domaine.

Les services de réseau 20 peuvent comprendre un site internet 21 du vote électronique, une interface 22 pour l'administration du vote électronique et le suivi du scrutin, et un service de réseau internet 23 pour la génération des clefs de cryptage.

Les services de cryptographie 30 peuvent comprendre un service de réseau internet 31 utilisé par le site internet 21 de vote électronique et d'un service de réseau internet 32 utilisé par l'interface 22 de l'administration du vote électronique.

Les serveurs de bases de données 40 comprennent plusieurs bases de données. Par exemple, comme représenté sur la figure 1, les serveurs de bases de données 40 comprennent une base de données 41 où sont stockées les clés de cryptage, une base de données 42 où sont conservées les définitions des bulletins de vote pour chaque profil d'électeur, des urnes temporaires 43 où sont stockées les bulletins de vote en attente de validation de l'électeur, des urnes 44 où sont conservés les bulletins de vote cryptés validés correspondant à chaque élection, des tables de résultat 45 complétées après le décryptage des bulletins de vote, et des listes d'émargement 46 des électeurs.

Les acteurs du système interagissent par exemple avec les services de cryptographie 30 et des bases de données 40 par l'intermédiaire des services de réseau 20.

Avantageusement, les échanges entre les différentes entités de l'environnement du vote électronique s'effectuent par un réseau sécurisé, notamment un réseau internet sécurisé. Par exemple, les échanges peuvent s'effectuer selon le protocole de transfert hypertexte sécurisé (« https »). La connexion sécurisée entre les différentes entités de l'environnement du vote électronique permet de garantir la confidentialité et l'intégrité des bulletins de vote, en garantissant qu'aucune possibilité n'est offerte à une personne extérieure de visualiser le bulletin de vote ou d'accéder au contenu du bulletin de vote de l'électeur.

De préférence, le temps de réponse des services de réseau 20, des services de cryptographie 30 et des serveurs de données 40 sont optimisés de façon à permettre à l'électeur de voter rapidement et sans contrainte.

De plus, l'électeur peut voter en toute confidentialité à partir de n'importe quel moyen informatique relié au réseau internet. En effet, l'électeur peut se connecter sur le site internet 21 de vote électronique via une connexion sécurisée en mode « https » et s'identifier à l'aide d'un identifiant et d'un mot de passe associé afin d'effectuer son vote électronique. Aucun téléchargement de logiciel n'est prérequis, la définition des bulletins de vote et les clés de cryptage publiques de vote et de validation étant envoyées au navigateur internet du votant.

Plus précisément, l'électeur, lorsqu'il est enregistré dans la liste électorale, se voit associer un identifiant unique permettant de s'assurer de l'unicité de vote. A cet identifiant est ensuite associé un mot de passe qui permet à l'électeur de se connecter au système de vote électronique. Par ailleurs, les données d'état civil correspondant à un électeur sont conservées dans une base de données différente et ne lui sont associées que lorsque nécessaire, par exemple pour l'édition de la liste d'émargement, pour l'envoi d'un accusé de réception de vote nominatif ou pour la recherche dans une liste électorale. Ainsi, au vue du système de vote, un électeur est associé à un numéro aléatoire.

Dès sa connexion, le système établit une transaction, par exemple via IIS, entre le navigateur internet de l'électeur et le site internet 21 de vote électronique. A cette transaction est associé un numéro aléatoire unique par le moteur transactionnel IIS qui va être stocké dans une base de données représentant les actions de votes électroniques en cours et dont le numéro sera associé à l'identifiant unique de l'électeur. Suite à cette transaction, l'électeur n'existe plus que par son numéro de transaction aléatoire affecté par IIS. Le numéro de transaction aléatoire est destiné à ne durer que le temps du vote électronique et à s'effacer à la confirmation du vote par l'électeur, ou si l'électeur reste inactif trop longtemps sur le site internet 21 du vote électronique. L'électeur peut donc échanger des données de vote avec le système dans le total anonymat de sa transaction IIS et au travers d'un tuyau de cryptage SSL/TLS.

L'invention concerne une méthode de sécurisation et de vérifiabilité d'un vote électronique, notamment dans l'environnement d'exécution d'un vote électronique tel que décrit précédemment.

La méthode selon l'invention est mise en œuvre par des moyens informatiques, par exemple par des ordinateurs, des tablettes connectées, des téléphones portables ou tout moyen informatique ayant accès à un réseau internet.

Un mode de réalisation préféré de la méthode selon l'invention est représenté en figure 2. La méthode de sécurisation et vérifiabilité d'un vote électronique comprend :
- une étape S10 de réception d'un bulletin de vote temporaire,
- une étape S20 de réception d'un bulletin de vote de validation,
- une étape S30 de décryptage, et
- une étape S40 de validation.

Durant l'étape S10 de réception d'un bulletin de vote temporaire, un bulletin de vote temporaire est reçu d'une entité votante. Une entité votante correspond à une entité qui effectue le vote électronique, par exemple un électeur. Le bulletin de vote temporaire est destiné à être enregistré comme bulletin de vote définitif après validation de l'entité votante.

Le bulletin de vote temporaire est crypté au moyen d'une clé de cryptage publique de vote. La clé de cryptage publique de vote est associée à une clé de cryptage privée de vote. Plus précisément, une paire de clés de cryptage de vote est associée à un bulletin de vote temporaire, puis à un bulletin de vote définitif lorsque le bulletin de vote temporaire est enregistré comme bulletin de vote définitif.

Avantageusement, le cryptage utilisé est un cryptage asymétrique, du type chiffrement RSA. Par exemple, la clé de cryptage publique de vote permet de chiffrer le bulletin de vote temporaire et la clé de cryptage privée de vote permet de déchiffrer le bulletin de vote définitif.

La clé de cryptage publique de vote est stockée dans une base de données 40, par exemple la base de données 41 de stockage des clés de cryptage. La clé de cryptage publique de vote est générée par le service de réseau internet 23 pour la génération des clefs de cryptage, puis transmise à la base de données 41 via le service de réseau internet 32 utilisé par l'interface 22 de l'administration du vote électronique.

La clé de cryptage privée de vote est conservée sur un dispositif de sauvegarde, hors du réseau internet. Par exemple, la clé de cryptage privée de vote peut être écrite sur un dispositif de sauvegarde, du type une clé USB, destiné à être conservé par le Président central et/ou les assesseurs 13 dans un coffre-fort. De façon avantageuse, la clé de cryptage privée de vote associée à la clé de cryptage publique du bulletin de vote temporaire est accessible uniquement aux assesseurs du vote et lorsque le vote est terminé.

Le bulletin de vote temporaire crypté envoyé par l'entité votante est reçu par les services de réseau 20, par exemple par le site internet 21 du vote électronique, puis transmis à un service de cryptographie 30, notamment au service de réseau internet 31.

Le bulletin de vote temporaire crypté est stocké dans une base de données, telle que l'urne temporaire 43.

Au cours de l'étape S20 de réception d'un bulletin de vote de validation, un bulletin de vote de validation est reçu de l'entité votante.

De façon avantageuse, le bulletin de vote temporaire et le bulletin de vote de validation sont reçus conjointement de l'entité distance.

Le bulletin de vote de validation est crypté au moyen d'une clé de cryptage publique de validation, associée à une clé de cryptage privée de validation. Autrement dit, une paire de clés de cryptage de validation est associée à un bulletin de vote de validation.

Avantageusement, le cryptage de validation est un cryptage asymétrique, du type chiffrement RSA.

La clé de cryptage privée de validation et la clé de cryptage publique de validation sont stockées dans une base de données, par exemple la base de données 41 de stockage des clés de cryptage.

La paire de clé de cryptage de validation est générée par le service de réseau internet 23 pour la génération des clés de cryptage, puis transmise à la base de données 41 via le service de réseau internet 32.

Avantageusement, la clé de cryptage publique de validation est différente de la clé de cryptage publique de vote. De même, la clé de cryptage privée de vote associée à la clé de cryptage publique de vote est avantageusement différente de la clé de cryptage privée de validation associée à la clé de cryptage publique de validation.

Le bulletin de vote de validation crypté est reçu par les services de réseau 20, par exemple par le site internet 21 du vote électronique, puis transmis à un service de cryptographie 30, notamment à un service de réseau internet 31 utilisé par le site internet 21 de vote électronique.

Durant l'étape S30 de décryptage, le bulletin de vote de validation est décrypté au moyen d'une clé de cryptage privée de validation associée à ladite clé de cryptage publique de validation.

La clé de cryptage privée de validation est préalablement extraite de la base de données dans laquelle elle est stockée afin de pouvoir décrypter le bulletin de vote de validation.

Au cours de l'étape S40 de validation, une demande de validation générée à partir du bulletin de vote de validation décrypté est envoyée à l'entité votante.

Avantageusement, la définition du bulletin de vote est également extraite de la base de données dans laquelle elle est stockée, par exemple de la base de données 42. La définition d'un bulletin de vote correspond au profil d'un électeur et aux données qui en découlent, comme par exemple les noms des listes ou des candidats se présentant à l'élection. Le bulletin de vote de validation décrypté peut être comparé avec la définition du bulletin de vote avant que la demande de validation ne soit envoyée à l'entité votante.

Durant l'attente de la validation de la demande de validation, le bulletin de vote de validation n'est pas conservé dans une base de données, mais est stocké dans une mémoire du service de cryptographie 30 donnant un caractère éphémère au bulletin de vote de validation.

Suite à la réception de la demande de validation, l'entité votante peut valider ou invalider la demande de validation. Autrement dit, le votant peut valider son vote si celui-ci est conforme à son choix, ou l'invalider si celui-ci ne correspond pas à son choix.

Les étapes S10 à S40 sont répétées jusqu'à validation de la demande de validation par l'entité votante.

Lorsque la demande de validation est validée par l'entité votante, le bulletin de vote temporaire crypté est enregistré comme bulletin de vote définitif en attente de son dépouillement, et le bulletin de vote de validation est supprimé de la mémoire du service de cryptographie 30.

De façon avantageuse, préalablement à la répétition des étapes, le bulletin de vote temporaire crypté est supprimé.

Le bulletin de vote temporaire n'est pas décrypté.

Suite à la validation de la demande de validation, le bulletin de vote temporaire est transféré de la base de données temporaire dans laquelle il était stocké vers une nouvelle base de données. Par exemple, le bulletin de vote temporaire peut être déplacé de l'urne temporaire 43 vers l'urne 44 où sont conservés les bulletins de vote cryptés validés.

Autrement dit, après la validation de la demande de validation, la validation de la transaction IIS, autrement connu sous le terme anglophone « commit », est effectuée et le bulletin de vote temporaire est transféré de la base de données des bulletins de vote en attente de confirmation à la base de données des bulletins de vote définitifs.

Lors de l'enregistrement du bulletin de vote définitif, une indication que ladite entité votante a voté est enregistrée. Autrement dit, lorsque le bulletin de vote temporaire crypté est enregistré comme bulletin de vote définitif, la liste d'émargement de l'élection est automatiquement remplie et l'entité votante reçoit une confirmation de vote.

La validation de la transaction permet de déclencher l'émargement de l'électeur dans la liste des votants car la transaction IIS est terminée.

De préférence, aucun lien n'existe entre la base de données des bulletins de vote et la base de données de la liste d'émargement, de ce fait l'anonymat des données échangées dans la transaction de vote IIS est garantie, le lien entre le nom du votant et le contenu de son bulletin étant rompu dès la connexion établie par l'électeur, c'est-à-dire dès son identification sur le site internet 21 de vote électronique.

Le numéro aléatoire unique de la transaction IIS associé à l'identifiant de l'électeur permet de faire la correspondance avec l'électeur. L'émargement automatique immédiat permet de prévenir toute tentative de double vote, et de garantir l'unicité du vote électronique.

De préférence, au cours de l'étape S40 de validation, dès que la demande de validation est générée, le bulletin de vote de validation est supprimé. Plus précisément, le bulletin de vote de validation, crypté ou décrypté, n'est pas conservé dans une base de données ou sur un disque dur. Le bulletin de vote de validation est destiné à être stocké dans une mémoire vive du service de cryptographie 30, avant d'être supprimé. Le bulletin de vote de validation décrypté peut exister uniquement sur le navigateur de l'entité votante et dans la mémoire d'un service de cryptographie, tel que le service de réseau internet 31 utilisé par le site internet 21 de vote électronique.

Les étapes S10 à S40 permettent de garantir le chiffrement ininterrompu du bulletin de vote dès son émission sur les moyens informatiques de l'électeur. De plus, la génération d'un bulletin de vote temporaire crypté et d'un bulletin de vote de validation crypté permet de garantir un double cryptage des données.

En outre, la demande de validation reçue par l'entité votante permet au votant de vérifier l'intégrité de son vote.

Avantageusement, une pluralité de bulletins de vote de validation cryptés avec différentes clés de cryptage publique de validation peut être générée pour chaque bulletin de vote temporaire. Plus précisément, la demande de validation peut être générée à partir d'un bulletin de vote de validation sélectionné aléatoirement parmi la pluralité de bulletins de vote de validation. La sélection aléatoire d'un bulletin de vote de validation parmi la pluralité de bulletin de vote de validation associée au bulletin de vote temporaire permet d'augmenter la sécurité du vote électronique.

Comme illustré sur la figure 3, la méthode peut également comprendre, préalablement à l'étape S40 de validation, une étape S31 de vérification par le votant. Au cours de l'étape de vérification S31 par le votant, le contenu du bulletin de vote de validation est vérifié.

L'étape de vérification permet de limiter les risques de piratage du vote électronique. En effet, le votant peut contrôler de manière fiable que son vote a été pris en compte par le système sans avoir été modifié et qu'il n'a donc pas été manipulé, par exemple, par un programme malveillant présent dans l'ordinateur utilisé. En particulier, le votant peut s'assurer que le bulletin de vote de validation transmis est bien celui qu'il a émis.

La méthode peut également comprendre une étape S01 de sélection d'au moins une clé de cryptage publique de validation. Au cours de l'étape S01 de sélection, au moins une clé de cryptage publique de validation est sélectionnée aléatoirement parmi un ensemble de clés de cryptage publiques de validation.

Avantageusement, suite à l'étape S01 de sélection, la méthode comprend une étape S02 d'envoi. Durant l'étape S02 d'envoi, au moins une définition de bulletin de vote, une clé de cryptage publique de vote et une clé de cryptage publique de validation sont envoyées à une entité votante.

Suite à une étape de connexion et d'identification de l'entité votante, la définition du bulletin de vote et les clés de cryptage publiques de vote et de validation peuvent être envoyées au navigateur internet de l'entité votante.

La méthode peut également comprendre une étape S50 de dépouillement. Durant l'étape S50 de dépouillement, une clé de cryptage privé de vote associée à la clé de cryptage publique de vote est reçue et les bulletins de vote définitif sont décryptés aux moyens ladite clé de cryptage privé.

Les clés de cryptage privées de vote détenues uniquement par le Président et ses assesseurs sont chargées après la clôture du scrutin dans la base de données où elles seront stockées pour permettre le dépouillement après la clôture du scrutin, par exemple la base de données 41 où sont stockées les clés de cryptage. Les clés de cryptage privées de vote sont utilisées pour décrypter les bulletins de vote définitifs des votants.. Les résultats du vote sont transmis à une base de données, par exemple à des tables de résultat 45.

Suite au remplissage des bases de données avec les résultats des votes, des rapports officiels contenant des informations sur le résultat de l'élection et le contenu des listes d'émargement sont envoyés, par exemple aux membres des bureaux de vote.

L'invention a été décrite dans le cas où un bulletin de vote de validation est reçu de l'entité votante. Bien entendu, la méthode selon l'invention n'est nullement limitée au mode de réalisation décrit et illustré, qui n'a été donné qu'à titre d'exemple. Au contraire, la méthode selon l'invention pourrait comprendre une pluralité de bulletins de vote de validation associée au bulletin de vote temporaire, de façon à augmenter la sécurité du vote électronique.

## Revendications

1. Méthode de sécurisation et de vérifiabilité d'un vote électronique, la méthode étant mise en œuvre par des moyens informatiques et comprenant:
- une étape (S10) de réception d'un bulletin de vote temporaire, au cours de laquelle un bulletin de vote temporaire est reçu d'une entité votante, le bulletin de vote temporaire étant crypté au moyen d'une clé de cryptage publique de vote,
- une étape (S20) de réception d'un bulletin de vote de validation, au cours de laquelle un bulletin de vote de validation est reçu de ladite entité votante, le bulletin de vote de validation étant crypté au moyen d'une clé de cryptage publique de validation,
- une étape (S30) de décryptage, au cours de laquelle le bulletin de vote de validation est décrypté au moyen d'une clé de cryptage privée de validation associée à ladite clé de cryptage publique de validation,
- une étape de validation (S40), au cours de laquelle une demande de validation générée à partir du bulletin de vote de validation décrypté est envoyée à ladite entité votante, les étapes précédentes étant répétées jusqu'à validation de la demande de validation par ladite entité votante suite à quoi le bulletin de vote temporaire crypté est enregistré comme bulletin de vote définitif en attente de son dépouillement.

2. Méthode selon la revendication 1, comprenant préalablement aux étapes (S10, S20) de réception d'un bulletin de vote temporaire et de validation, une étape (S02) d'envoi au cours de laquelle au moins une définition de bulletin de vote, une clé de cryptage publique de vote et une clé de cryptage publique de validation sont envoyées à ladite entité votante.

3. Méthode selon la revendication précédente, comprenant préalablement à l'étape (S02) d'envoi, une étape (S01) de sélection d'au moins une clé de cryptage publique de validation au cours de laquelle au moins une clé de cryptage publique de validation est sélectionnée aléatoirement parmi un ensemble de clés de cryptage publique de validation.

4. Méthode selon l'une quelconque des revendications précédentes, dans laquelle la clé de cryptage publique de validation est différente de la clé de cryptage publique de vote.

5. Méthode selon l'une quelconque des revendications précédentes, dans laquelle la clé de cryptage privée de vote associée à la clé de cryptage publique de vote est différente de la clé de cryptage privée de validation associée à la clé de cryptage publique de validation.

6. Méthode selon l'une quelconque des revendications précédentes, comprenant préalablement à l'étape (S40) de validation, une étape (S31) de vérification par l'entité votante au cours de laquelle le contenu du bulletin de vote de validation est vérifié.

7. Méthode selon l'une quelconque des revendications précédentes, dans laquelle au cours de l'étape (S40) de validation dès que la demande de validation est générée le bulletin de vote de validation est supprimé.

8. Méthode selon l'une quelconque des revendications précédentes, dans laquelle le bulletin de vote temporaire n'est pas décrypté.

9. Méthode selon l'une quelconque des revendications précédentes, dans laquelle préalablement à la répétition des étapes, le bulletin de vote temporaire crypté est supprimé.

10. Méthode selon l'une quelconque des revendications précédentes, la clé de cryptage privée de vote associée à la clé de cryptage publique du bulletin de vote temporaire est accessible uniquement aux assesseurs du vote.

## Patentansprüche

1. Verfahren zur Sicherung und zur Verifizierbarkeit einer elektronischen Abstimmung, wobei das Verfahren von IT-Mitteln umgesetzt wird und umfasst:
- einen Schritt (S10) des Empfangens eines temporären Stimmzettels, in dessen Verlauf ein temporärer Stimmzettel von einer abstimmenden Entität empfangen wird, wobei der temporäre Stimmzettel mittels eines öffentlichen Abstimmungs-Verschlüsselungsschlüssels verschlüsselt ist,
- einen Schritt (S20) des Empfangens eines Validierungs-Stimmzettels, in dessen Verlauf ein Validierungs-Stimmzettel von der abstimmenden Entität empfangen wird, wobei der Validierungs-Stimmzettel mittels eines öffentlichen Validierungs-Verschlüsselungsschlüssels verschlüsselt ist,
- einen Schritt (S30) des Entschlüsselns, in dessen Verlauf der Validierungs-Stimmzettel mittels eines privaten Validierungs-Verschlüsselungsschlüssels, der mit dem öffentlichen Validierungs-Verschlüsselungsschlüssel verknüpft ist, entschlüsselt wird,
- einen Schritt des Validierens (S40), in dessen Verlauf eine auf Grundlage des entschlüsselten Validierungs-Stimmzettels erzeugte Validierungsanfrage an die abstimmende Entität gesendet wird, wobei die vorstehenden Schritte bis zur Validierung der Validierungsanfrage durch die abstimmende Entität wiederholt werden, woraufhin der verschlüsselte temporäre Stimmzettel als endgültiger Stimmzettel in Erwartung seiner Auszählung verzeichnet wird.

2. Verfahren nach Anspruch 1, das vor den Schritten (S10, S20) des Empfangens eines temporären und Validierungs-Stimmzettels einen Schritt (S02) des Sendens umfasst, in dessen Verlauf mindestens eine Stimmzettel-Definition, ein öffentlicher Abstimmungs-Verschlüsselungsschlüssel und ein öffentlicher Validierungs-Verschlüsselungsschlüssel an die abstimmende Entität gesendet werden.

3. Verfahren nach dem vorstehenden Anspruch, das vor dem Schritt (S02) des Sendens einen Schritt (S01) des Auswählens von mindestens einem öffentlichen Validierungs-Verschlüsselungsschlüssel umfasst, in dessen Verlauf mindestens ein öffentlicher Validierungs-Verschlüsselungsschlüssel zufällig aus einem Satz von öffentlichen Validierungs-Verschlüsselungsschlüsseln ausgewählt wird.

4. Verfahren nach einem der vorstehenden Ansprüche, wobei sich der öffentliche Validierungs-Verschlüsselungsschlüssel vom öffentlichen Abstimmungs-Verschlüsselungsschlüssel unterscheidet.

5. Verfahren nach einem der vorstehenden Ansprüche, wobei sich der private Abstimmungs-Verschlüsselungsschlüssel, der mit dem öffentlichen Abstimmungs-Verschlüsselungsschlüssel verknüpft ist, von dem privaten Validierungs-Verschlüsselungsschlüssel, der mit dem öffentlichen Validierungs-Verschlüsselungsschlüssel verknüpft ist, unterscheidet.

6. Verfahren nach einem der vorstehenden Ansprüche, das vor dem Schritt (S40) des Validierens einen Schritt (S31) des Verifizierens durch die abstimmende Entität umfasst, in dessen Verlauf der Inhalt des Validierungs-Stimmzettels verifiziert wird.

7. Verfahren nach einem der vorstehenden Ansprüche, wobei der Validierungs-Stimmzettel im Laufe des Schritts (S40) des Validierens gelöscht wird, sobald die Validierungsanfrage erzeugt wurde.

8. Verfahren nach einem der vorstehenden Ansprüche, wobei der temporäre Stimmzettel nicht entschlüsselt wird.

9. Verfahren nach einem der vorstehenden Ansprüche, wobei der verschlüsselte temporäre Stimmzettel vor dem Wiederholen der Schritte gelöscht wird.

10. Verfahren nach einem der vorstehenden Ansprüche, wobei der private Abstimmungs-Verschlüsselungsschlüssel, der mit dem öffentlichen Verschlüsselungsschlüssel des temporären Stimmzettels verknüpft ist, nur den Beisitzern der Abstimmung zugänglich ist.

## Claims

1. Method for securing and ensuring the auditability of an electronic vote, the method being implemented by computer means and comprising:
- a step (S10) of receiving a temporary ballot, during which a temporary ballot is received from a voting entity, the temporary ballot being encrypted by means of a public vote encryption key,
- a step (S20) of receiving a validation ballot, during which a validation ballot is received from said voting entity, the validation ballot being encrypted by means of a public validation encryption key,
- a step (S30) of decrypting, during which the validation ballot is decrypted by means of a private validation encryption key associated with said public validation encryption key,
- a step of validating (S40), during which a validation request generated from the decrypted validation ballot is sent to said voting entity, the preceding steps being repeated until validation of the validation request by said voting entity whereafter the encrypted temporary ballot is recorded as a definitive ballot waiting to be counted.

2. Method according to claim 1, comprising prior to the steps (S10, S20) of receiving a temporary and validation ballot, a step (S02) of sending during which at least a ballot definition, a public vote encryption key and a public validation encryption key are sent to said voting entity.

3. Method according to the preceding claim, comprising prior to the step (S02) of sending, a step (S01) of selecting at least one public validation encryption key during which at least one public validation encryption key is selected randomly from a set of public validation encryption keys.

4. Method according to any preceding claim, wherein the public validation encryption key is different from the public vote encryption key.

5. Method according to any preceding claim, wherein the private vote encryption key associated with the public vote encryption key is different from the private validation encryption key associated with the public validation encryption key.

6. Method according to any preceding claim, comprising prior to the step (S40) of validating, a step (S31) of verifying by the voting entity during which the content of the validation ballot is verified.

7. Method according to any preceding claim, wherein during the step (S40) of validating as soon as the validation request is generated the validation ballot is deleted.

8. Method according to any preceding claim, wherein the temporary ballot is not decrypted.

9. Method according to any preceding claim, wherein prior to repeating the steps, the encrypted temporary ballot is deleted.

10. Method according to any preceding claim, wherein the private vote encryption key associated with the public encryption key of the temporary ballot is accessible only to assessors of the vote.
